(19)

**Europäisches Patentamt**
**European Patent Office**
**Office européen des brevets**

(11)  **EP 2 615 356 B1**

(12)  **EUROPEAN PATENT SPECIFICATION**

(45) Date of publication and mention
of the grant of the patent:
**25.05.2016  Bulletin 2016/21**

(51) Int Cl.:
***F17C 5/06*** *(2006.01)*      ***F17C 13/02*** *(2006.01)*

(21) Application number: **12305049.4**

(22) Date of filing: **13.01.2012**

(54) **Method for the preparation of compressed oxidant-fuel gas mixtures**

Verfahren zur Herstellung von komprimierten Mischungen aus Oxidans und Brenngas

Procédé de préparation de mélanges de gaz oxydant-carburant comprimés

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.07.2013  Bulletin 2013/29**

(73) Proprietor: **L'Air Liquide Société Anonyme pour
l'Etude et
l'Exploitation des Procédés Georges Claude
75007 Paris (FR)**

(72) Inventors:
• **Naudet, Valérie**
**92370 CHAVILLE (FR)**

• **Paillard, Claude-Etienne**
**45750 SAINT PRYVÉ SAINT MESMIN (FR)**
• **Barbier, Jean-Paul**
**78112 FOURQUEUX (FR)**

(74) Representative: **Mellul-Bendelac, Sylvie Lisette
L'Air Liquide
Direction des Services
De la Propriété Intellectuelle
75, Quai d'Orsay
75321 Paris Cedex 07 (FR)**

(56) References cited:
**EP-A2- 0 313 176      WO-A1-03/021018
GB-A- 855 200      GB-A- 2 281 228**

**Description**

The present invention relates to the field of the methods for the preparation of compressed oxidant-fuel gas mixtures.

Such oxidant-fuel gas mixtures are widely used for many applications including health care (pulmonary treatment), diving, automotive analyses, flammable detector calibration etc....

Generally, those gases are stored at high pressure in cylinders. Obviously the mixtures content must be manufactured preventing explosion and damage during the filling of cylinders and final gaseous mixtures compositions in cylinder have to be accurate and outside the flammability range.

One of the objectives of the present invention is to be able to propose for each case submitted (kinds of oxidant and fuel considered, amount of each component in the required mixture) a method of preparation of the required mixture, offering both safe and accurate characteristics.

It is well known in this industrial domain that accidents have happened in the past during the manufacture or use of such mixtures, being essentially due to the lack of data on the variation of explosion limits versus pressure, leading sometimes to the production of an explosive mixture, this being notably related to the fact that gases have very low ignition energies.

On the other hand, If each gas company has its own internal filling safety rules for producing such compressed oxidant-fuel gas mixtures (rules generally not known from the other gas companies), one can always rely on the European Industrial Gases Association ("EIGA"), who has published a code of good practice i.e of recommendations, for the safe preparation of compressed oxidant-fuel gas mixtures (document 139/10/E entitled "SAFE PREPARATION OF COMPRESSED OXIDANT-FUEL GAS MIXTURES IN CYLINDERS").

In this EIGA document, rules are given to prepare mixtures for which flammability data as a function of pressure are not known : according to those rules, in all cases the oxidant is to be introduced at the end, and the document defines the maximum filling pressure based on the positioning of the fuel concentration in the mixture towards the lower flammability limit.

To better understand the principle of such rules, let's here consider the example of mixtures containing one flammable gas in air, where the EIGA document gives the following rules to allow the manufacturing of such mixtures below the Lower Explosion Limit (LEL) :

- Compressed oxidant-fuel gas mixtures containing one flammable gas in concentrations of less than or equal to 25 % of the LEL in air at atmospheric pressure can be manufactured at a maximum pressure of the cylinder service pressure and at a maximum of 200 bar.
- Compressed oxidant-fuel gas mixtures containing one flammable gas in concentrations greater than 25% and less than or equal to 50 % of the LEL in air at atmospheric pressure can be manufactured at a maximum pressure of the cylinder service pressure and at a maximum of 150 bar.
- Compressed oxidant-fuel gas mixtures containing one flammable gas in concentrations greater than 50 % and less than or equal to 75 % of the LEL in air at atmospheric pressure can be manufactured at a pressure which shall not exceed 1/10 of the cylinder service pressure.
- Compressed oxidant-fuel gas mixtures containing one flammable gas in concentrations greater than 75% of the LEL in air at atmospheric pressure shall simply not be manufactured without data on explosivity at final filling pressure.

For cases where a temporarily explosive mixture can exist, the EIGA requirement is to calculate or have data available on the energy which will be created by a potential explosion. The calculated explosive energy shall result in potential explosive pressures less than the service pressure of the cylinder plus a safety factor taking into account any possible gas detonation.

This means that the EIGA rules recommend the introduction of oxygen at the end even if it is the major component and that no rule are already available for cases leading to the formation of a temporarily explosive mixture. Another specificity of the EIGA rules concerns the non dependence of the rules with fuels properties. All the rules cited previously are the same whatever the flammable characteristics. This decision leads to EIGA maximum filling pressures in most cases lower than the ones that could result from more optimized calculations. This shows that the EIGA rules are much more conservative compared to what could be the wishes of the users and those rules do not take into account the real chemical phenomenon that could occur in case of ignition of an explosive mixture.

On the other hand, it is well known that three preparation methods can be used for the manufacture of compressed oxidant-fuel gas mixtures if one does not consider the dynamic blending methods :

1. The Manometric technique, where the partial pressure of the components are added step by step. This procedure involves measuring the pressure increase in cylinder during and after the addition of each component at a defined temperature. The production tolerance mainly depends on the accuracy of the pressure gauges and temperature measurements. The advantage of this method is the high level of flexibility but the disadvantage is the low process accuracy.

2. The Gravimetric technique, where the individual components are weighed out. The mass contents are determined directly and then converted into substance contents. The weighting process is one of the most accurate of the physical measuring, processes. High precision gas mixtures can be produced by this method.

3. The Volumetric method, using a syringe or intermediate cylinders where volume and pressure measurements are used.

As will be seen below in more details bellow, according to the present invention, the following analysis of each case is made and a procedure chosen, taking into account that the risk of explosion depends not only on the gas species manipulated but also on the filling order (the filling order of gases in cylinder plays an important role on the explosion risk and consequently, on the relation between maximum pressure and mixture composition).

We therefore consider according to the present invention two cases, to be discussed separately in order to establish a relation between the maximum filling pressure and the flammable concentrations:

A/ Cases where the Flammability range is not crossed during the cylinder filling. It is the case if the oxidant being the major component, is introduced first in the cylinder before fuels (to obtain a lean (fuel) mixture), or, if fuel(s) being the major component, are introduced first (to obtain a rich (fuel) mixture) and wherein the addition of the last (minor) component is achieved just before reaching the flammability limit taking into account a safety margin which depends on the cylinder test pressure. This first case and method can be called a "safe method" because the average composition of the mixture in cylinder remains non-flammable during the filling. One could take note that according to this "safe" approach, the major component is introduced first, not always the oxidant as according to EIGA rules evoked above.

B/ Cases where the Flammability range is crossed. According to this approach, the minor components are introduced first in the cylinder. According to the nature of the mixtures, the regime of the flame propagation in case of explosion might be a deflagration or a detonation. The safety margin must be more important if there is a risk of detonation. This second case and approach, can be called an "accurate method", since it generates more risks but its accuracy is better since the minor components are introduced first in the cylinder (method more precise, less "conservative").

Here again, one could take note that according to this "accurate" approach, the minor component is introduced first, not always the oxidant as according to EIGA rules evoked above.

The skilled man will understand without ambiguity that the present invention offers conditions of fabrication much less conservative compared to the EIGA, the difference lying in the significant effort made by the Applicant here to study the combustion phenomena and develop a scientific approach.

Thus, the present invention relates to a method for the preparation of a compressed oxidant-fuel gas mixture, on a production site, of a given compressed oxidant-fuel gas mixture or oxidant-fuel-inert gas mixture, comprising one or more oxidant gases, comprising one or more fuel gases, and comprising optionally one or more inert gases, the mixture being characterized by an oxidant gas(es) content and a fuel gas(es) content, the method following an order of introduction of each kind of gas in a cylinder, and comprising the following steps :

- providing the diagrams of maximum pressure of filling to prevent accident as a function of the fuel concentration for lean mixtures and rich mixtures of said oxidant/fuel mixtures, these diagrams being obtained from flammability limits and detonation limits versus pressure at ambient temperature, maximum pressure being calculated from adiabatic flame temperature at constant volume and from parameters deduced from detonation theories;
- preparing the mixture according to one of the following two routes:

A/ A first said "safe" route, according to the following steps :

i) Introducing first inside a cylinder the major component among the oxidant and fuel components in said given mixture,
j) Introducing inside the cylinder the minor component among the oxidant and fuel components in said given mixture, the addition of the minor component being achieved before reaching the flammability limit taking into account a safety margin on the maximum pressure in the cylinder which depends on the cylinder test pressure;
k) whereas if said mixture contains one or more inert gases, the introduction of the inert gas(es) inside the cylinder is performed between steps i) and j).

B/ A second said "accurate" route, according to the following steps :

a) Introducing first inside the cylinder the minor component among the oxidant and fuel components in said given mixture,
b) Introducing inside the cylinder the major component among the oxidant and fuel components in said given mixture,
c) whereas if said mixture contains one or more inert gases, the introduction of the inert gas(es) inside the cylinder is performed between said steps a) and b),

wherein during the filling the pressure inside the cylinder is kept below a maximum pressure set point whose value takes into account an additional safety margin towards the margin applied in the said first "safe" route.

As will appear clearly to the skilled man in view of the above, whether the production site makes as a rule or not an imposed order of introduction of the gases in the cylinder, one of the two routes (safe or accurate) will then be imposed to the preparation of the mixture in question. For example, when the production site makes as a rule an imposed order of introduction of the gases in the cylinder, i.e introducing first in the cylinder the major component among the oxidant and fuel components in said given mixture then the said "safe" route will be imposed for the considered fabrication.

Let's now enter into more details to better understand those two proposed routes.

Prevention of gas explosion disasters requires a good knowledge of combustible mixture characteristics (flammability limits, energy release, flame velocity, thermodynamic and kinetic properties, and burning rates). Knowledge of flammability limits versus pressure and temperature is essential to prepare a compressed oxidant-fuel gas mixture without risk of serious damage and one should keep in mind that even if very rare, a spontaneous ignition is always possible in the cylinder, notably near the inlet jet that could be formed during the filling.

Let's remind that flammability limits refer to the composition range within which flame propagation can be brought by external ignition. It constitutes fundamental data for combustible mixtures. However, the experimental determination of flammability limits is more difficult than may be expected. Flame propagation near limits depends on many parameters (ignition energy, experimental device, phenomena due to gravitation, buoyancy).

Let's remind also that recommended standard test methods for explosion limits determination are described in references ASTM E681, ASTM E918, ASTM E2079, DIN 51649-1 and EN 1839.

Lower Flammability Limit (LFL) and Upper Flammability Limit (UFL) have been determined experimentally for many fuel-air systems for more than one century and are reported by the literature, but data resulting from old determinations are not always sure and too dependent on experimental set-up.

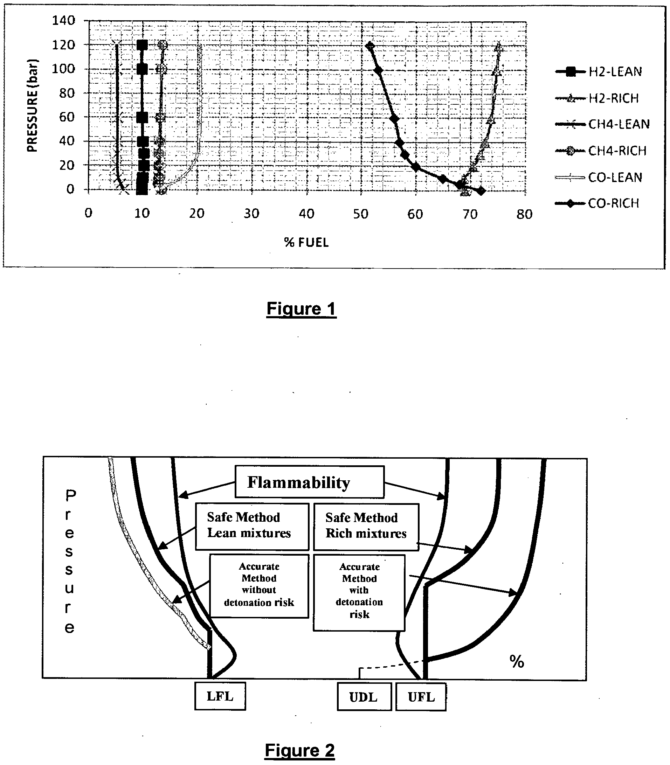

But the variation of those flammability limits with pressure has been published only for a few systems and often for a narrow pressure range. The results are sometimes old data and the methods and flammability criteria were not the same as today. This raises significant difficulties since experimental flammability limits can vary often in an unexpected manner with pressure, as illustrated in Figure 1 attached (taken from the work of Bones et al in 1928 : Bone W. A., Newitt D. M., and Smith C. M., "Gaseous combustion at high pressures", Proc. Royal Soc., Vol. A 117, 553-572, (1928)).

Flammability limits can increase or decrease with a pressure increase as a function of the chemical system.

Thermodynamical data of each component of a mixture are necessary to evaluate the risk of damage during filling of cylinder (enthalpies of formation, heat capacity, Gibbs energy, etc.). Chemical kinetics data are also useful to evaluate the flame behavior near the limits. Several codes are available (and well known from the skilled man) such as STANJAN or EQUIL (CHEMKIN) to calculate adiabatic flame temperature and Chapman-Jouguet detonation parameters. Laminar flame speed can be determined on the basis of a kinetic model with premix (CHEMKIN) or some other commercial codes. However it is often difficult to compare calculated laminar flame speeds with experimental determinations because of flame instabilities and various disruptions which often occur near limits.

The method according to the present invention takes into account the following assumptions:

- Gases are not condensable in the pressure and temperature range of interest. In storage conditions, oxidant and fuel do not react. Pure fuel cannot decompose and produce an explosion.
- Mixtures composed of several flammables and/or several oxidants and/or several inerts are assimilated to an equivalent mixture based on assimilation rules. It results in an equivalent mixture containing one equivalent flammable, one equivalent oxidant and one equivalent inert. In the following we will therefore talk about the "oxidant content" of the mixture and of the "fuel content" of the mixture or of the "inert content" of the mixture, whatever the case being : the mixture containing only one oxidant or several, the mixture containing only one fuel gas or several, the mixture containing only one inert gas or several (when an inert gas is present, this being only an option according to the present invention which aims at preparing both Fuel-Ox binary mixtures or Fuel-Ox-inert ternary mixtures).
- Only binary mixtures (fuel + oxidant) or ternary mixtures (fuel +inert gas + oxidant) are considered according to the present invention Inert gas is always introduced in cylinder before last reactive component and between flammables and oxidants.

- The cylinder test pressure (pressure used for cylinder qualification) is known.

Let's come into more details in what follows about the said first "safe" method.

Major components (higher concentrations in final mixture which is the oxidant(s) for lean mixtures and the flammables for rich mixtures) are first introduced in the cylinder and minor components are introduced at the end. In this case, the equivalent flammable concentration is never in the flammability range during filling. However, possibility of ignition must be taken into account near the injection nose during filling.

Three conditions have to be respected to establish the relation between maximum pressure and flammable concentration of the targeted mixture:

1. The FINAL flammable content should always be outside flammability limits to avoid the manufacture of an explosive mixture.

2. The fuel composition should be kept outside flammability limits DURING the cylinder filling procedure, taking into account limits variations versus pressure.

3. In case of mixture ignition near the interface between flammables and oxidants, final gas explosion pressure should always be less than the cylinder test pressure. A diffusion flame can be stabilized near the interface or a flame can propagate through the cylinder during filling.

Consequently, if flammability limits are known versus pressure as shown in figure 1 attached, the maximum manufacturing pressure can be evaluated based on combustion assumptions. A 5% safety margin on the minor component contents can be for example advantageously applied in order to take into account the mixture preparation accuracy linked with the component introduction error.

Obviously, final pressure must be less than the cylinder test pressure in case of ignition at the interface between flammable and oxidant during cylinder filling.

The final pressure evaluation can be estimated by assuming an adiabatic combustion at constant volume and the applicability of the perfect gas law. With these assumptions, we can consider the following:

$$P_2/P_1 = (n_2/n_1)\,(T_2/T_1) \qquad\qquad [1]$$

where P, T, and n are pressure, temperature and number of moles respectively. Subscripts 1 and 2 refer respectively to unburned gases at the initial state and burned gases at the final state. $P_2$ corresponds approximately to the maximum pressure at the end of combustion in regime of slow deflagration (flame velocity and laminar flame speed multiplied by the coefficient of expansion are not very different one to the other). It is well verified that, near flammability, limits for all systems, deflagration is not strongly accelerated and a deflagration detonation transition (DDT) is never observed except with particular devices conceived to increase turbulence and accelerate flame propagation velocity.

For combustion at constant pressure, adiabatic flame temperature is linked with combustion enthalpy at $T_1$, and $\Delta_{comb}h_{T1}$, by the relation:

$$\Delta_{comb}h_{T1} + \int_{T1}^{T2}c_P(\text{products})dT = 0 \qquad\qquad [2]$$

and, for a reaction at constant volume, by the relation:

$$\Delta_{comb}u_{T1} + \int_{T1}^{T2}c_V(\text{products})dT = 0 \qquad\qquad [3]$$

where $c_P$ and $c_V$ are heat capacities of products of reaction at constant pressure and at constant volume respectively. $\Delta_{comb}u_{T1}$ is the internal energy variation due to complete combustion. In closed vessel, flame temperature is, given by relation [2] at the beginning of the combustion, and by relation [3] at the end of the combustion if the reaction is complete.

Heat capacity of reaction products varies with temperature but, for a small interval of concentration near flammability limit, the variation stays weak. With this approximation in mind, relation [3] can be written:

$$x\,\Delta_{comb}U_{T1} + C_{V(\text{products})}\,(T_2-T_1) = 0 \qquad\qquad [4]$$

where $A_{comb}U_{T1}$ is the variation of internal energy for one mole of fuel at temperature $T_1$, and x is the molar fraction of burned fuel in mixture.

Finally, for a lean mixture, we can write:

$$T_2 = T_1 + a \, [\%F] \qquad\qquad [5]$$

where

$$a = - \Delta_{comb}U_{T1}/100 \; C_{V(products)} \quad \text{and} \quad x=[\%F]/100.$$

Then, a reference mixture with a flammable content $[F]_{ref}$ and a flame temperature $T_{2,ref}$ is used. $T_{2,ref}$ can be accurately calculated using one of the available and published code (STANJAN or EQUIL of CHEMKIN codes). We can therefore write:

$$T_{2,ref} = T_1 + a \, ( \, [\%F]_{ref}) \qquad\qquad [6]$$

As $T_2$ is directly correlated with $[\%F]$, we consider that $T_2$ only depends on hydrogen concentration near limits and not on pressure. It is not true for all fuels for an extended range of pressure. From [5] and [6] we can deduce:

$$T_2 = T_{2,ref} + a \, ([\%F] - [\%F]_{ref}) \qquad\qquad [7]$$

where "a" can be directly deduced from temperatures computed on both sides of $T_{2,ref}$. By replacing $T_2$ by [7] in equation [1], we found:

$$P_2 / P_1 = (n_2/n_1) \, ( \, T_{2,ref} + a \, ([\%F] - [\%F]_{ref}) \, / \, T_1 \qquad\qquad [8]$$

However $P_2/P_1$ calculated by equation [8] is not realistic because the combustion cannot be complete in the cylinder if the concentration of fuel is globally less than lower flammability limit for a lean mixture (and more than upper flammability limit for a rich mixture).

Pressure $P'_2$ at the end of combustion will be lower than $P_2$ if combustion is not complete. The ratio $P'_2/P_1$ will be less than $P_2/P_1$ multiplied by the ratio of combustion such as, for a lean mixture:

$$P'_2 / P_1 = (n_2/n_1) \, (T_2/T_1) \, ([\%F] / [\%F]_{LFL})$$

(LFL : lower flammability limit)

Finally, using the "safe" process (Sa) for preparing a lean mixture (L), maximum pressure $P_{Sa,L}$ in cylinder, shall be a function of cylinder test pressure $P_{test}$. By putting $P_{Sa,L} = P_1$ and $P_{test} = P'_2$ :

$$P_{Sa,L} = P_{test} \, (n_1/n_2) \, T_1 \, ([\%F]_{LFL}) / ([\%F]_{Sa,L} \, (T_{2,ref} + a \, ([\%F]_{Sa,L} - [\%F]_{ref})) \qquad [9]$$

with:

$$[\%F]_{Sa,L} \le [\%F]_{LFL}, \qquad\qquad [10]$$

For rich mixtures, adiabatic flame temperature is limited by the quantity of burned oxidizer:

$$[\%Ox] = \alpha(100 - [\%F])$$

Where $\alpha$ depends on the quantity of oxidizer in inert gas ($\alpha=0.21$ in air). By using a reference temperature as shown previously, we can write:

$$T_2 = T_1 + b\,(100 - [\%F]) \qquad\qquad [11]$$

where [%F] is the molar fuel percentage in the mixture. The parameter "b" can be calculated from the variation of internal energy due to the combustion reaction. This variation is however not equal to $\Delta_{comb}U_{T1}$ because the products of reaction are not only $H_2O$ and $CO_2$ in the case of rich mixtures, near the limit. It is recommended to evaluate "b" by computing the adiabatic flame temperatures $T_{2,1}$ and $T_{2,2}$ on both sides of $T_{2,ref}$ :

$$b=(T_{2,1} - T_{2,2})\,([\%F]_1 - [\%F]_2)$$

By considering that all oxidizer is not burned if globally its concentration is less than the upper flammability limit, the ratio $P_2'/P_1$ can be written:

$$P_2{}'/P_1 = (n_2/n_1)\,(T_2/T_1)\,(100- [\%F])\,/(100- [\%F]_{UFL})$$

(UFL : upper flammability limit)

Finally, one can conclude that using the said "safe" process (Sa) for preparing a rich mixture (R), maximum pressure $P_{Sa,R}$ in cylinder shall be a function of cylinder test pressure $P_{test}$.

By putting $P_{Sa,R}=P_1$ and $P_{test}=P_2$ :

$$P_{Sa,R} = P_{test}\,(n_1/n_2)\,T_1\,(100-[\%F]_{UFL})/((100-[\%F]_{Sa,R})\,(T_{2,ref} + b\,([\%F]_{ref} -[\%F]_{Sa,R})))$$

$$([12])$$

with

$$[\%F]_{Sa,R} \geq [\%F]_{UFL}, \qquad\qquad [13]$$

Relations [9] and [12] give the maximum pressure $P_{Sa,i}$ (i=L for lean and i=R for rich) for mixture composition for which flammability limits are known over the whole pressure range from very low pressure up to cylinder service pressure. Flammability limits of many pure gases and vapors in air are available in literature at ambient temperature and pressure. The main difficulty is to find the evolution of limits with pressure increase. Generally the variation of lower flammability limits with pressure is very low compared to the case of upper limits that can vary widely. Data have been published at high pressure but only for some fuels and mostly in air. The pressure dependence on flammability limits can be estimated on theoretical basis. The literature has notably proposed a theoretical approach of predicting the flammability limit. The theory assumes that below certain concentration of fuel gas in oxidizer, flame will be unable to propagate. The burning velocity at the limit is determined. In this model a single step forward reaction is considered and it is possible to define an order of reaction. Two cases are treated: phenomenon is adiabatic in front flame or there are heat losses from reaction zone. If flame velocity, $S_L$, has a critical value $S_{L,c}$ at the limit, the ratio $S_L/S_{L,c}$ is independent on the pressure p for a reaction of order equal to 1, and this ratio is proportional to $p^{1/2}$ for a reaction of order equal to 2. So, the variation of flammability limit should be known. However it is not possible to define a unique order of reaction on a large domain of pressure for fuel/air mixtures. Many "elementary" reactions such as initiation or radical recombination reactions do not have a fixed order overall the flame temperature range. Experimental determination is often not possible because of the thermo-diffusive instabilities. Near limits, cellular flames were observed characteristic of some mixtures such as lean $H_2$/air mixtures. The limiting laminar flame speed becomes essentially a theoretical notion to evaluate flammability limits. However, for many explosive mixtures, flame velocity is globally of order of 2 to 5 cm/s near flammability limits.

Let's come now into more details in what follows about the said second "accurate" method.

Here the flammability domain is crossed during mixture preparation. In case of explosion, according to the nature of the mixture and the experimental conditions, the regime of the flame propagation may be a deflagration or a detonation. The safety margin on the equivalent flammable content and on flammability limits shall be much more important if there is a risk of detonation. Both cases must be therefore separately treated.

_- Detonation range is crossed during mixture preparation_

Detonation limits strongly depend on vessel geometry and two classes of detonation initiation can be distinguished: direct initiation by shock waves due to external source of strong energy, and indirect initiation with a weak initiation followed by a flame acceleration and deflagration-to-detonation transition (DDT). With a direct initiation, it is relatively easy to determine the limit composition for which a self-sustained detonation is observed in a given confinement or for spherical propagation in a cloud. With a weak energy source, DDT is a complex phenomenon depending on turbulence evolution in the mixture. The orders of magnitude of energy sources are very different: sometimes more than 100 kJ for direct initiation and only few mJ or less for indirect initiation. On the other hand, it is easy to define the sensitivity to detonate for a combustible mixture. The sensitivity to detonate for a mixture of given composition can be defined from the detonation cell width, $\lambda$, which can be experimentally determined. Detonation cell size can also be estimated from chemical kinetics modeling of fuel oxidation. A self-sustained detonation will be able to propagate in cylindrical tube if $\lambda < \pi d$ where d is the tube diameter. Relations between cell size, critical tube diameter, initiation energy and detonability limits have been studied in the literature about thirty years ago, and many works have been published on the relation between the sensitivity of detonation characterized by $\lambda$, mixtures composition and initial pressure of mixture.

The cell size, which can be correlated with ignition delay time in detonation wave, decreases with pressure according to the relation:

$$\lambda \sim P^{-n} \qquad \text{with } 1 < n < 1.2$$

The pressure increase enhances the sensitivity to detonate. Detonation parameters (velocity, burned gas pressure, temperature and density) can be calculated using the Chapman-Jouguet theory. However a detonation will be not directly initiated in a tube, except if ignition energy is very important and initiates shock waves. In this case, pressure and temperature behind shock wave front (leading shock) must be of the order of pressure and temperature calculated on basis of ZND theory. More frequently, accidental detonation results of transition from deflagration to detonation (DDT) in closed tube. DDT is more rapid in small tubes than large tubes. A diameter reduction decreases transition distance. Obstacles often promote DDT in gases where deflagration is initiated but, generally, there is not obstacle inside cylinder. So, detonation limit depends on cylinder geometry where combustible mixture can be accidentally ignited. If tube diameter is too small ($d_c < \lambda/\pi$), self-sustained detonation wave does not propagate in a tube.

The pressure behind the detonation front depends on the mixture composition. Currently, the ratio Chapman-Jouguet pressure, $P_{CJ}$, with initial pressure $P_1$ is of the order of 20 or more for a gas mixture taken at ambient initial temperature. Calculated pressure behind the leading shock ($P_{ZND}$) is about twice $P_{CJ}$ but, at the time of the transition, pressure is much higher than $P_{ZND}$. For safety reasons it is not irrational to consider that the cylinder test pressure $P_{test}$ must be more than 5 times $P_{CJ}$ not to damage the cylinder. This order of magnitude can be almost reached if explosion occurs in unburned gases compressed by burned gases if temperature reaches auto-ignition temperature in unburned gases. To conclude, if the mixture is capable to detonate in flammability range, we shall verify the condition:

$$P_{test} \geq 5\, P_{CJ,\, DL} \qquad\qquad [14]$$

$P_{CJ,\, LD}$ is the value of $P_{CJ}$ at the detonation limit (DL) equal to $[\%F]_{DL}$. The ratio $P_{CJ}/P_1$ does not appreciably changes for a given composition of a mixture when initial pressure $P_1$ varies. From this ratio, we can deduce the maximum pressure $P_{1,DL}$ not to overtake at the detonation limit $[\%F]_{DL}$ during filling of cylinder:

$$P_{1,\, DL} = P_{test}/5(P_{CJ}/P_1)_{DL} \qquad\qquad [15]$$

To obtain a lean mixture (L) by the "accurate" method, oxidizer is last added (minor fuel first). The partial pressure of fuel, $P_{F,LDL}$, at lower detonation limit $[\%F]_{LDL}$, is:

$$P_{F,LDL} = [\%F]_{LDL}\, P_{1,LDL}/100$$

$P_{F,LDL}$ is constant during oxidant addition and the fuel concentration [%F] decreases with addition of oxidant and total pressure P:

$$[\%F] = 100\ P_{F,LDL}/P \qquad\qquad [16]$$

The maximum pressure in cylinder, $P_{Ac,L}$, to prepare a lean mixture (L) by accurate method (Ac) will then be:

$$P_{Ac,L} = 100\ P_{F,LDL}\ /[\ \%F]_{Ac,L} \qquad\qquad [17]$$

With the condition:

$$[\%F]_{Ac,L} \leq [\%F]_{Sa,L} \qquad\qquad [18]$$

Relation [16] represents the variation of fuel concentration when oxidant is added to the maximum partial pressure $P_{F,LDL}$ that is contained in cylinder. The final fuel concentration in cylinder shall not exceed the value given by relations [18].

Now to prepare a rich mixture by the said "accurate" method, the conditions [14] and [15] remain valid. Fuel is here the last component added (the oxidant = minor is the first). The sum of partial pressures of inert (in) and oxidant (ox) are fixed during addition of fuel. This sum will be deduced from upper detonation limit:

$$(P_{in} + P_{ox})_{UDL} = P_{1,UDL}\ (100 - [\%F]_{UDL})/100 \qquad\qquad [19]$$

Maximum initial pressure at upper detonation limit, $P_{1,UDL}$, is deduced from the cylinder test pressure, as shown previously:

$$P_{1,UDL} = P_{test}/5(P_{CJ}/P_1)_{UDL} \qquad\qquad [20]$$

Relations [17] and [18] become for a rich mixture:

$$P_{Ac,R} = 100\ (P_{in} + P_{ox})_{UDL}\ /(100 - [\ \%F]_{Ac,R}) \qquad\qquad [21]$$

and

$$[\%F]_{Ac,R} > [\%F]_{Sa,R} \qquad\qquad [22]$$

$P_{Ac,R}$ being the maximum pressure in cylinder to prepare a rich mixture (R) by said accurate method (Ac).

Even if, for many chemical systems DDT is not very probable in tube without obstacle, it is advisable to respect conditions [17] and [18] for a lean mixture and conditions [21] and [22] for a rich mixture to avoid serious damage in case of ignition during filling of cylinder. As seen previously, the main difficulty is to evaluate detonation limit which varies with pressure and with vessel geometry.

[0064] - Detonation domain is not crossed during mixture preparation: This case is frequent if the combustion enthalpy is weak or if the fuel is sufficiently diluted by inert gas. Thus, we propose here a procedure so that at no time the mixture is flammable during the filling of cylinder. The procedure is exemplified below for the preparation of a lean mixture of $H_2$ in air:

- Firstly, fuel is put into cylinder before inert gas (manufacturing of a lean mixture). The domain of detonation is never crossed if, before the introduction of oxygen in the cylinder, the percentage of fuel in inert gas is such as the percentage of fuel is sufficient to avoid the crossing of the detonation range.
- Secondly, as the flammability domain should be avoided, the lean and rich "safe" method curves can be used to deduce accurate method curves.

The following assumptions are made:

- the maximum concentration of fuel in the mixture at fixed pressure, deduced from data obtained by the "safe" method, is known. This concentration is given versus pressure by relations [9] and [10].
- during oxidant filling, as we have a temporary rich mixture, the level of oxygen in mixture shall not exceed that deduced from relations [12] and [13] (safe method for rich mixtures) as long as the fuel content in mixture does not fall below that given by relations [9] and [10]. The mixture will not be flammable if, during filling of cylinder, we can simultaneously verify:

$$P_F/P_{ox} \geq X_F = [P_F/P_{ox}]_{Sa,R} \qquad [23]$$

and

$$[\%F] \leq [\%F]_{Sa,L} \qquad [24]$$

The ratio $[P_F/P_{ox}]_{Sa,R}$ is determined from relation [12] since, for a pressure $P_{Sa,R}=P_1$, $[\%F]_{Sa,R}$ is known. The concentration of fuel, $[\%F]=100\,P_F/(P_F+P_{in}+P_{ox})= 100\,P_F/P$, decreases while oxidant is added. For a mixture pressure, $P_1$, such as fuel concentration in mixture is $[\%F]_{Sa,L}$, we can deduce the ratio:

$$P_F = ([\%F]_{Sa,L} / 100)\, P_1$$

Oxidant partial pressure will be $P_{ox} = P_F /X_F$ and $P_{inert} = P_1 - P_F - P_{ox}$. Final pressure of oxidant will be $P_{Ox,final}=\beta\, P_{inert}$ where $\beta$ is the coefficient of dilution of oxidant ($\beta=0.21/0.79$ in dry air).
Final pressure $P_{Ac,L}$ and fuel concentration $[\%F]_{Ac,L}$ given by accurate method for a lean mixture will then be:

$$P_{Ac,L} = P_F + P_{inert}(1+ \beta) \qquad [25]$$

and

$$[\%F]_{Ac,L}= 100\, P_F/ P_{Ac,L} \qquad [26]$$

As previously, subscripts $_{Sa, Ac, L, R}$ respectively refer to safe and accurate method, lean and rich mixtures. The procedure here can be called "accurate and safe method" since the flammability range is never crossed.
The different curves linking maximum pressure and flammable content in mixture are summarized in figure 2 attached.
Let's now illustrate in what follows the implementation of the invention, and notably the determination of the flammability curves with the example of the $H_2$-Air mixtures.
The maximum filling pressure versus $H_2$ concentration in air will be computed taking into account the filling order. Spontaneous not expected ignitions of hydrogen in air have been inventoried by several research groups in their publications. The more frequent case of non-controlled ignition seems to be due to sudden compressed hydrogen releases not always well documented in existing literature. However it is known that rapid failure of a pressure boundary separating compressed gas in air can result in shock wave formation. Low density of hydrogen specially promotes ignition of turbulent jet. Controlled spontaneous ignition of hydrogen releases has been experimentally and numerically studied. This phenomenon is generally due to equipment failure or activation of a pressure relief. As hydrogen has a very low ignition energy (less than 0.1 mJ), accidental ignition due to an electrostatic discharge is easy to achieve. A heat surface can initiate combustion in $H_2$/air mixture but the local temperature must be higher than 800 K. However, if the surface has a catalytic effect promoting oxidation, as it is the case for some metals of transition, ignition can occur at much lower temperature than 800 K.
Let's then consider below the example of $H_2$-air mixtures.
Explosive $H_2$-air mixture properties have been extensively studied in the literature for tens of years. Data on commonly accepted flammability limits and self-ignition temperature values at ambient pressure are given in Table 1 below.

Table 1: Flammability (upwards propagation) and detonation limits (lower: LFL/LDL and upper: UFL/UDL) for hydrogen-oxygen mixtures at room temperature and atmospheric pressure

| | Deflagration | | Detonation | | $T_{auto\text{-}ign}$ (K) |
|---|---|---|---|---|---|
| | **LFL** | **UFL** | **LDL** | **UDL** | |
| **% $H_2$** | 4% | 75% | 18% | 58.8% | 833 |
| | *3.9%* | *77%* | *15%* | *65%* | *845* |

In practice, accidental detonation, during cylinder filling, should be initiated "indirectly" by the process of ignition of mixture by discharge of relatively small energy, flame acceleration, deflagration-to-detonation transition (DDT). This phenomenon has been very much studied and very largely detailed for $H_2$-air mixtures in a report of the Nuclear Energy Agency (OECD). In fact, as seen previously, a detonation could be very difficult to initiate in a tube of less than 20 cm if concentration of hydrogen in air is less than 15% or more than 65%. Between 11.5% $H_2$ and 18% $H_2$ in air at atmospheric pressure and ambient temperature, a strong flame acceleration (typically the flame velocity becomes more than 600 m/s) can be observed essentially if turbulence of sufficient intensity is generated in mixture, for example, by repeated obstacles or turbulent jets. At $H_2$ concentration greater than 18%, DDT can be observed. If a self-sustained detonation is not possible, DDT cannot be expected. The "direct initiation" is highly unlikely because the considerable amount of concentrated energy which is required for this process.

- Results for the "safe" method applied to lean mixtures :

The introduction order of gases in cylinder is the following: Oxygen, Nitrogen, then Hydrogen. "Air" is supposed to be dry and composed of a mixture of $O_2$ in $N_2$ in the ratio of moles number equal to 21/79. LFL (lower flammability limit) versus pressure has been determined by various authors, the results published show sometimes big discrepancies depending on the method used, on the age of the study etc...) : from LFL $\approx$ 10 mol% $H_2$, to LFL $\approx$ 4.25$\pm$0.25 %$H_2$ between 1 and 2.5 bar, LFL given in EN 1839 (B) standard being 4.0 mol% $H_2$.

This important discrepancy between lower flammability limits published can be related to the very particular behavior of the hydrogen flame specially in lean mixtures, but can also be related to differences in the limit definition used by each author.

From the slope of the flammability limit variation with pressure given by Bone et al. (already cited above), the following equation can be written:

$$C_{LFL} \text{ (bar)} = -260 \text{ [\% } H_2] + 1034 \qquad \text{(for } 20 < P_C \text{ (bar)} < 150) \qquad [27]$$

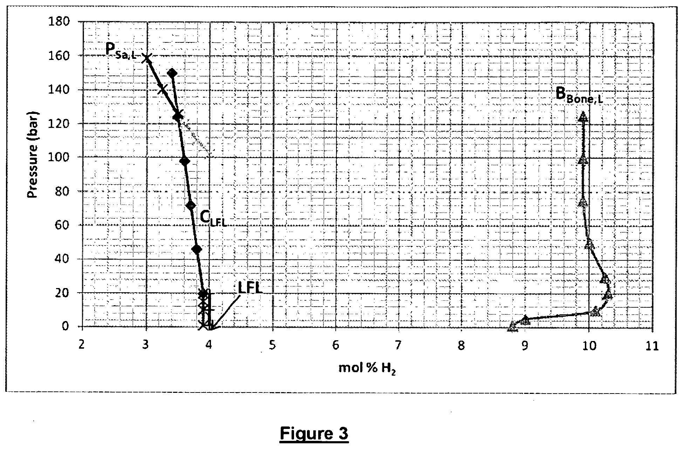

A 4% hydrogen lower limit has been selected between 1 and 20 bar. The corresponding pressure versus LFL concentration ($C_{LFL}$) plot is shown in figure 3 attached.

More precisely, the figure 3 shows the Lower Flammability Limits versus pressure and maximum pressure in cylinder:

-    LFL: standard value in ambient condition.
-    Safe method: $C_{LFL}$, maximum pressure in cylinder without taking into account cylinder test pressure; $P_{Sa,L}$ : maximum pressure in cylinder taking into account cylinder test pressure ($P_{test}$=250 bars).
-    $B_{Bone,L}$: the experimental data for lean mixtures (as per Bone et al, already cited above).

As seen previously, cylinder test pressure shall not be reached in case of ignition near the gas inlet. Relation [9] and [10] can be used to evaluate the maximum pressure versus $H_2$ concentration, [% $H_2$]$_{Sa,L}$, by taking into account cylinder test pressure. The relation [9] and [10] can be written:

$$P_{Sa,L} = P_{test} \, (n_1/n_2) \, T_1 \, ([\%H_2]_{LFL} )/([\% H_2]_{Sa,L} \, (T_{2,ref} - a([\%H_2]_{Sa,L} -[\% H_2]_{Ref}))$$

$$[9']$$

and:

$$[\%H_2]_{Sa,L} \leq C_{LFL,} \qquad\qquad [10']$$

In the example shown in figure 3, $P_{test}$=250 bar, $T_1$=298 K, $T_{2,ref}$=744 K, a=108 K mol%$^{-1}$ and $[\%H_2]_{Ref}$=4 mol%. Obviously, plot $P_{Sa,L}$ versus [% F] can depend on LFL versus pressure. LFL is taken constant and equal to 4% $H_2$ to calculate $P_{Sa,L}$ between 1 and 150 bar. The temperature of reference $T_{2,ref}$ is computed by EQUIL for $[\%H_2]_{Ref}$=4% by assuming adiabatic combustion at constant volume. If $[\%H_2]_{Sa,L} \geq 3.5$ mol%, we can write :

$$P_{Sa,L} = C_{LFL} \qquad\text{with } 3.5 \text{ mol\%} \leq [\%H_2]_{Ref} \leq 3.9 \text{ mol\%}$$

The curves $C_{LFL}$ and $P_{Sa,L}$ can be moved if temperature is higher than ambient temperature. In order to avoid the explosion range, it is important to add a safety margin to take into account temperatures greater than 25°C. The flammability limit prediction at higher initial temperature than ambient temperature can be performed based on a calculation of an adiabatic flame temperature at constant pressure. In that case, we can consider that the adiabatic flame temperature at the flammability limit is independent of the initial temperature. Consequently, at initial temperature higher than ambient temperature, LFL is moved toward leaner mixture and UFL is moved toward richer mixture.

- Results for the "safe" method applied to rich mixtures :

The mixture preparation is performed in three steps: $H_2$ introduction, $N_2$ introduction and finally $O_2$ introduction. This introduction order leads to the formation of highly diluted intermediate $H_2$-inert mixture before the addition of oxygen. The hydrogen upper flammability limit (UFL) is given by several authors as being achieved for around 75 %$H_2$. The discrepancy between limits for upward and downward propagation is weak and less than 0.5%$H_2$.

The safety margin shall be greater than the uncertainty on mixture concentration (typically, 2 % on the minor component) and more important than that taken for lean mixtures as it is well known that UFLs are more difficult to measure than LFLs. To keep conservative we can suppose that a 76.5 mol% $H_2$ mixture will not be flammable at ambient pressure and temperature.

The pressure effect on the hydrogen upper limit has been experimentally studied by many authors.

From literature on the $H_2$/air system upper flammability limit and taking into account a safety margin, we can predict the maximum cylinder filling pressure, $C_{UFL}$, versus $H_2$ concentration by the relation:

$$C_{UFL} \text{ (bar)} = 20 + 8([\% H_2] - 76.5)^2 \quad \text{(for 20 bar} \leq C_{UFL} \leq 150 \text{ bar)} \qquad [28]$$

Finally the maximum pressure $P_{Sa,R}$ taking into account the cylinder test pressure ($P_{test}$=250 bar) can be deduced from equations [12] and [13]:

$$P_{Sa,R} = P_{test}(n_1/n_2)T_1(100-[\% H_2]_{UFL})/((100-[\% H_2]_{Sa,R})(T_{2,ref} + b([\%H_2]_{ref} - [\% H_2]_{Sa,R}))) \qquad [12']$$

with

$$[\%H_2]_{Sa,R} \geq C_{UFL} \qquad\qquad [13']$$

$P_{Sa,R}$ versus $[\%H_2]$ depends on UFL versus pressure. $P_{UFL} = f([\%H_2])$ can be estimated similarly to relation [28]:

$$P_{UFL} \text{ (bar)} = C_{UFL} \text{ (bar)} \quad \text{(for 20 bar} \leq P_{UFL} \leq 150 \text{ bar)} \qquad [29]$$

The temperature of reference $T_{2,ref}$ is computed by EQUIL for $[\%H_2]_{Ref}$=80% by assuming adiabatic combustion at constant volume.

If $[\%H_2]_{Sa,L} \geq 79$ mol%, we can write:

$$P_{Sa,L} = C_{UFL} \qquad \text{with } 76.5 \text{ mol\%} \leq [\%H_2]_{Ref} \leq 79 \text{ mol\%}$$

Curves $C_{LFL}$ and $P_{Sa,L}$ can be updated if temperature is greater than ambient temperature. As previously seen, the assumption of a constant adiabatic flame temperature at the flammability limit can be used to predict the limit variation with initial temperature.

- Results for the "accurate" method applied to lean mixtures:

With this filling method, the flammability or detonation domains can be crossed during the last component addition in cylinder.

The mixture preparation shall be done in three steps: hydrogen first, nitrogen then oxygen at the end. Oxygen is progressively added in $H_2/N_2$ mixture. The $O_2$ to $N_2$ ratio shall be finally equal to 0.21/0.79 (in dry air without argon and without other minority gases). At the end of filling, $H_2$ concentration must be less than the maximum concentration obtained by safe method. We can use maximum pressure diagram obtained by safe method to check if a detonation would be possible in mixture.

The lower detonation limit initiated by a detonator in a tube, is given equal to 18.2 mol% $H_2$ at ambient temperature and pressure by several publications. Although a detonation has been observed at lower $H_2$ concentration in particular conditions, the value of 18% $H_2$ can be selected as shown in previous discussion.

$[H_2]$ must be less than $[\%H_2]_{sa,L}$ in final mixture at pressure $P_{Ac,L}$. We must verify:

$$100 \, P_{H2}/P_{Ac,L} < [\%H_2]_{Sa,L}$$

$$\text{If } 100 \, P_{H2}/P_{Ac,L} = [\%H_2]_{sa,L},$$

we can deduce:

$$P_{H2}/P_{air} = [\%H_2]_{Sa,L}/(100-[\%H_2]_{Sa,L})$$

and

$$P_{H2}/P_{N2} = [\%H_2]_{Sa,L}/(0.79(100-[\%H_2]_{Sa,L}))$$

As $P_{H2}/P_{AC,L} \leq 0.04$, we obtain $P_{H2}/P_{air} < 0.0417$ and $P_{H2}/P_{N2} < 0.0527$. The $H_2$ concentration will be less than 5.3 mol% while cylinder is filled with oxygen. If $[\%H_2]_{Ac}$ is less than 4%, the concentration will be less than 5.3% $H_2$ in $H_2/O_2/N_2$ flammability range. From relation [15], as $P_{CJ}/P_1$ is less than 15 for $H_2/air$ mixtures, we can consider that initial pressure in detonation range should not exceed 4 bars if cylinder test pressure is of order of 250 bar. A detonation cannot occur at concentration less than 5,3% $H_2$ even if lower detonation limit decreases as pressure increases because the auto-ignition delay behind leading shock calculated on basis of detail kinetic mechanism become too long near limit.

We can calculate the conditions so that mixture is never flammable as $O_2$ is progressively added to initial mixture of $H_2$ in $N_2$. The conditions are given by relations [23] et [24] which become:

$$P_{H2}/P_{O2} \geq X_{H2/O2} = [P_{H2}/P_{O2}]_{Sa,R}$$

and

$$[\%H_2] \leq [\%H_2]_{Sa,L} \qquad \text{(in } H_2/N_2/O_2 \text{ mixtures)}$$

The ratio $[P_{H2}/P_{O2}]_{Sa,R}$ is determined from relation [12] for a pressure $P_{Sa \cdot R}=P_1$. The concentration of fuel will be:

$$[\%H_2] = 100\ P_{H2}/(P_{H2}+P_{N2}+P_{O2}) = 100\ P_F/P$$

Hydrogen concentration decreases as $O_2$ is added. For a mixture pressure, $P_1$, such as $[\%H_2] = [\%H_2]_{Sa,L}$, we can deduce the ratio:

$$P_{H2} = ([\%H_2]_{Sa,L} / 100)\ P_1$$

Oxygen partial pressure will be $P_{O2} = P_{H2}/X$ and $P_{N2} = P_1 - P_{H2} - P_{O2}$. Final pressure of oxygen will be $P_{O2,final} = \beta\ P_{inert}$ where $\beta$ is the coefficient of dilution of oxygen by nitrogen ($\beta = 1{,}266$ in dry air). Final pressure $P_{Ac,L}$ and fuel concentration $[\%H_2]_{Ac,L}$ given by accurate method for a lean mixture will be:

$$P_{Ac,L} = P_{H2} + P_{N2}(1+\beta) \qquad [30]$$

and

$$[\%H_2]_{Ac,L} = 100\ P_{H2}/\ P_{Ac,L} \qquad [31]$$

Procedure is repeated for different values of $P_1$. The procedure can be called "accurate and safe method" because the flammability range would be never crossed if the mixture was perfectly homogenous during filling of cylinder.

- Results for the "accurate" method applied to rich mixtures :

The mixture preparation is done in two stages: Introduction of air, then Introduction of hydrogen.
In this case, the detonation range can be crossed during filling. Recent experimental data have been published on detonability of $H_2$/air mixture for initial pressure lower than 2 bar (work of Bozier et al : Bozier O., Sorin R., Virot F., Zitoun R., Desbordes D., "Detonability of binary H2/CH4-Air mixtures", Proc. of 3th I.C.H.S., ID 188 (Sept. 2009)). They have obtained a detonation in mixture of 58% $H_2$ in air at initial pressure of 1 bar and detonation limit few vary up to 2 bar. This value is comparable to that found by older publications (58,8 % $H_2$). The ratio $P_{CJ}/P_1$ is about 12,5 at the limit. Assuming that relation [15] is valid and that UDL is 60% $H_2$, with $P_{test} = 250$ bar, we must verify:

$$P_{1,RL} = 250/(5\times12{,}5) = 4\ bar$$

Maximum partial pressure of air in cylinder can be easily deduced by assuming that the limit of detonation is 60% $H_2$.

$$(P_{airt})_{UDL} = 4\times0.4 = 1.6\ bar$$

The relations [16] and [17] become:

$$P_{Ac,R} = 160/(100 - [\%H_2]_{Ac,R}) \qquad [16']$$

and

$$[\%H_2]_{Ac,R} \geq 77\ mol\% \qquad [17']$$

where $P_{Ac,R}$ is maximum pressure in cylinder for a concentration of $H_2$ equal to $[\%H_2]_{Ac,R}$. Subscript $_{Ac,R}$ refers to accurate method for a rich mixture. Partial pressure of oxygen in cylinder should be limited at less than 0.336 bars.
The approach of the present invention can therefore be summarized as follows :

- Two routes of compressed oxidant-fuel gas mixtures preparation have been developed with the objective to avoid (important) damages during filling. First route can be called a "safe method" because the flammability range is not crossed during cylinder filling. The second route can be called an "accurate method" because minor components are first introduced in the cylinder, however, during addition of the last component, there is a risk of explosion, simple deflagration or detonation, since the flammability range is crossed. It was assumed that ignition is always possible during cylinder filling.

- The diagrams of maximum pressure of filling to prevent accident can be established as a function of fuel concentration for lean mixtures and rich mixtures. These diagrams are obtained from flammability limits and detonation limits versus pressure at ambient temperature. Maximum pressure is calculated from adiabatic flame temperature at constant volume and from parameters deduced from detonation theories available in the literature.

- Both methods have been applied to lean and rich hydrogen-air mixtures at conventional temperature (298 K). The flammability domain versus pressure (up to 150 bar) is determined from old and recent data found in literature. The safe method takes into account the cylinder test pressure to avoid any burst. The accurate method is based on an assumption of a possible detonation during filling for rich mixtures. A safety margin is added to take into account the error on flammability limit versus pressure curves. Most published data on flammability limits at high pressure are old and do not generally correspond to the same definition as today. New accurate experiments on flammability limits at high pressure can permit to reduce the safety margins and increase maximum pressure in cylinder for a given concentration of fuel in mixture.

- If flammability limit is not well known at high pressure, the mixture can be prepare at low pressure by accurate method then compressed under condition that compression is slow enough to avoid that auto-ignition temperature is approached. An advantage of the compression technique is that the partial pressure method using perfect gas law can be used without correction with a good accuracy at low pressure. However, too rapid compression can generate pressure wave and temperature in mixture can locally exceed adiabatic reversible compression temperature calculated by Poisson's law ($PV^Y$=constant). This method can then present risks and it is recommended to carry out the compression in several steps and efficiently cool cylinder between two steps.

**Claims**

1. A method for the preparation, on a production site, of a given compressed oxidant-fuel gas mixture or oxidant-fuel-inert gas mixture, comprising one or more oxidant gases, comprising one or more fuel gases, and comprising optionally one or more inert gases, the mixture being **characterized by** an oxidant gas(es) content and a fuel gas(es) content, the method following an order of introduction of each kind of gas in a cylinder, and comprising the following steps :

   - providing the diagrams of maximum pressure of filling to prevent accident as a function of the fuel concentration for lean mixtures and rich mixtures of said oxidant/fuel mixtures, these diagrams being obtained from flammability limits and detonation limits versus pressure at ambient temperature, maximum pressure being calculated from adiabatic flame temperature at constant volume and from parameters deduced from detonation theories;
   - preparing the mixture according to one of the following,two routes:

      A/ A first said "safe" route, according to the following steps :

         i) Introducing first inside a cylinder the major component among the oxidant and fuel components in said given mixture,
         j) Introducing inside the cylinder the minor component among the oxidant and fuel components in said given mixture, the addition of the minor component being achieved before reaching the flammability limit taking into account a safety margin on the maximum pressure in the cylinder which depends on the cylinder test pressure;
         k) Whereas if said mixture contains one or more inert gases, the introduction of the inert gas(es) inside the cylinder is performed between steps i) and j).

      B/ A second said "accurate" route, according to the following steps .

         a) Introducing first inside the cylinder the minor component among the oxidant and fuel components in said given mixture,
         b) Introducing inside the cylinder the major component among the oxidant and fuel components in said given mixture,

c) whereas if said mixture contains one or more inert gases, the introduction of the inert gas(es) inside the cylinder is performed between said steps a) and b),

Wherein during the filling the pressure inside the cylinder is kept below a maximum pressure set point whose value takes into account an additional safety margin towards the margin applied in the said first "safe" route.

## Patentansprüche

1. Verfahren zur Herstellung, an einer Produktionsstätte, eines vorgegebenen komprimierten Oxidationsmittel-Brennstoff-Gasgemischs oder Oxidationsmittel-Brennstoff-Inertgasgemischs, umfassend ein oder mehrere Oxidationsmittelgase, die ein oder mehrere Brennstoffgase umfassen, und umfassend wahlweise ein oder mehrere Inertgase, wobei das Gemisch durch einen Gehalt von Oxidationsmittelgas(en) und einen Gehalt von Brennstoffgas(en) gekennzeichnet ist, wobei das Verfahren einer Einleitungsreihenfolge jeder Gasart in einen Zylinder folgt und die folgenden Schritte umfasst:

- Bereitstellen der Diagramme des maximalen Fülldrucks, um Unfälle zu vermeiden, in Abhängigkeit der Brennstoffkonzentration für magere Gemische und reiche Gemische der Oxidationsmittel/Brennstoff-Gemische; wobei diese Diagramme aus Entflammbarkeitsgrenzen und Explosionsgrenzen gegenüber einem Druck bei Umgebungstemperatur erhalten werden, wobei der maximale Druck aus einer adiabaten Flammentemperatur bei konstantem Volumen und aus Parametern berechnet wird, die aus Explosionstheorien abgeleitet werden;
- Herstellen des Gemischs gemäß einem der folgenden zwei Wege:

A/ einem ersten "sicheren" Weg, gemäß den folgenden Schritten:

i) zuerst Einleiten eines Hauptbestandteils der Oxidationsmittel- und Brennstoffbestandteile in dem vorgegebenen Gemisch in einen Zylinder,
j) Einleiten des Nebenbestandteils der Oxidationsmittel- und Brennstoffbestandteile in dem vorgegebenen Gemisch in den Zylinder, wobei die Zugabe des Nebenbestandteils vor Erreichen der Entflammbarkeitsgrenze unter Berücksichtigung einer Sicherheitsspanne hinsichtlich des maximalen Drucks in dem Zylinder, der von dem Zylinderprüfdruck abhängt, erzielt wird;
k) wohingegen, falls das Gemisch ein oder mehrere Inertgase enthält, die Einleitung des bzw. der Inertgas (e) in den Zylinder zwischen Schritt i) und j) ausgeführt wird.

B/ einem zweiten "genauen" Weg, gemäß den folgenden Schritten:

a) zuerst Einleiten des Nebenbestandteils der Oxidationsmittel- und Brennstoffbestandteile in dem vorgegebenen Gemisch in den Zylinder,
b) Einleiten des Hauptbestandteils der Oxidationsmittel- und Brennstoffbestandteile in dem vorgegebenen Gemisch in den Zylinder,
c) wohingegen, falls das Gemisch ein oder mehrere Inertgase enthält, die Einleitung des bzw. der Inertgas(e) in den Zylinder zwischen Schritt a) und b) ausgeführt wird,

wobei während des Füllens der Druck im Inneren des Zylinders unter einem maximalen Drucksollwert gehalten wird, dessen Wert eine zusätzliche Sicherheitsspanne hin zu der Spanne berücksichtigt, die in dem ersten "sicheren" Weg angewendet wird.

## Revendications

1. Procédé de préparation, sur un site de production, d'un mélange gazeux oxydant-combustible comprimé donné ou d'un mélange gazeux oxydant-combustible-gaz inerte, comprenant un ou plusieurs gaz oxydants, comprenant un ou plusieurs gaz combustibles et comprenant éventuellement un ou plusieurs gaz inertes, le mélange étant **caractérisé par** une teneur en gaz oxydant (s) et une teneur en gaz combustible(s), le procédé suivant l'ordre d'introduction de chaque type de gaz dans un cylindre et comprenant les étapes suivantes :

- la fourniture des diagrammes de pression maximale de remplissage pour empêcher un accident en fonction de la concentration en combustible pour des mélanges pauvres et des mélanges riches desdits mélanges oxydant/combustible, ces diagrammes étant obtenus à partir des limites d'inflammabilité et des limites de détonation en fonction de la pression à la température ambiante, la pression maximale étant calculée à partir de la température de flamme adiabatique à un volume constant et à partir des paramètres déduits des théories de détonation ;

- la préparation du mélange selon l'une des deux voies suivantes :

A/ ladite première voie "sûre", selon les étapes suivantes :

i) l'introduction en premier à l'intérieur d'un cylindre du composant majeur parmi les composants oxydant et combustible dans ledit mélange donné,

j) l'introduction à l'intérieur du cylindre du composant mineur parmi les composants oxydant et combustible dans ledit mélange donné, l'addition du composant mineur étant réalisée avant d'atteindre la limite d'inflammabilité en prenant en compte une marge de sécurité au niveau de la pression maximale dans le cylindre qui dépend de la pression de test du cylindre,

k) alors que si ledit mélange contient un ou plusieurs gaz inertes, l'introduction du ou des gaz inertes à l'intérieur du cylindre est réalisée entre les étapes i) et j),

B/ ladite seconde voie "sûre", selon les étapes suivantes :

a) l'introduction en premier à l'intérieur du cylindre du composant mineur parmi les composants oxydant et combustible dans ledit mélange donné,

b) l'introduction à l'intérieur du cylindre du composant majeur parmi les composants oxydant et combustible dans ledit mélange donné,

c) alors que si ledit mélange contient un ou plusieurs gaz inertes, l'introduction du ou des gaz inertes à l'intérieur du cylindre est réalisée entre les étapes a) et b),

dans lequel, pendant le remplissage, la pression à l'intérieur du cylindre est maintenue en dessous d'un point fixé de pression maximale dont la valeur prend en compte une marge de sécurité supplémentaire par rapport à la marge appliquée dans ladite première voie "sûre".

**Figure 1**

**Figure 2**

**Figure 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BONE W. A. ; NEWITT D. M. ; SMITH C. M.** Gaseous combustion at high pressures. *Proc. Royal Soc.,* 1928, vol. 117, 553-572

- **BOZIER O. ; SORIN R. ; VIROT F. ; ZITOUN R. ; DESBORDES D.** Detonability of binary H2/CH4-Air mixtures. *Proc. of 3th I.C.H.S.,* September 2009, vol. 188